# EUROPÄISCHE PATENTSCHRIFT

(11) **EP 1 469 299 B1**
(45) Veröffentlichungstag und Bekanntmachung des Hinweises auf die Patenterteilung: **05.11.2008**
(21) Anmeldenummer: 04001423.5
(22) Anmeldetag: 23.01.2004
(51) Int. Cl.: G01N 21/05, G01N 21/15

(54) **Messküvette für ein Fotometer, sowie Verfahren zum Betrieb derselben**
Measuring cuvette for a photometer, and method of use
Cuvette de mesure pour un photomètre, et méthode d'utilisation

(30) Priorität: 16.04.2003 DE 10317495
(43) Veröffentlichungstag der Anmeldung: 20.10.2004
(60) Teilanmeldung: 06026556.8
(73) Patentinhaber: ABB AG, 68309 Mannheim (DE)
(72) Erfinder: Fabinski, Walter, Dipl.-Ing., 65830 Kriftel (DE); Wasse, Marianne, 60431 Frankfurt/Main (DE)

(56) Entgegenhaltungen:
- DE-A- 10 049 125
- DE-A- 10 057 652
- GB-A- 1 012 268
- US-A- 4 377 001
- US-A- 4 652 127
- US-A- 4 958 075
- US-A- 5 222 389

## Beschreibung

Die Erfindung betrifft eine Meßküvette für ein Fotometer gemäß Oberbegriff des Patentanspruches 1.

Bei Fotometern handelt es sich um Spektrometer, bei denen Strahlung mit der oder den zu messenden Medien in Wechselwirkung treten. Dabei wird Licht von einer bekannten Strahlungsquelle ausgesendet und durch eine sogenannte Meßküvette geleitet. Am gegenüberliegenden Ende ist ein Detektor angeordnet. Innerhalb der Meßküvette befindet sich das Meßgas, welches zur Analyse hindurchgeleitet wird. Im allgemeinen wird auf der Basis der Absorptionsspektroskopie gearbeitet, bei der charakteristische Strahlungsbanden, die energetisch im Licht, d.h. im primären Licht der Strahlungsquelle enthalten sind, innerhalb des Meßgases von den entsprechenden Molekülen der zu messenden Meßgaskomponente absorbiert werden. Je nach dem charakteristischen Selektivierungsverfahren oder dem verwendeten Wellenlängenbereich unterscheidet man beispielsweise das nichtdispersive Verfahren für den infraroten (NDIR) oder UV (NDUV) Strahlungsbereich. Ein weiteres Verfahren ist die UV-Resonanz Absorptions Spektrokopie (UV-RAS).

Die Strahlungsabsorption als solche ist dabei ein Maß für die Konzentration des die Absorption bewerkstelligenden Gases bzw. der entsprechenden Gaskomponente. Hierzu läßt man das Meßgas durch eine Meßküvette in diesem Falle von definierter Länge durchströmen, wobei an den Endseiten der zumeist rohrförmigen Küvette optisch durchlässige Fenster angeordnet sind. Die optische Durchlässigkeit dieser Fenster bemißt sich dabei an den zu erfassenden Strahlungsbanden, für die die entsprechenden Küvettenfenster optisch durchlässig sein müssen.

Üblicherweise haben Meßküvetten bekannter Bauart zwei Fenster. Dabei ist ein Fenster am Gaseingang und ein Fenster am Gasausgang. Mit anderen Worten heißt dies, daß die Meßküvette der gesamten Länge nach durchströmt wird und sich die Meßgasein- und Meßgasausgänge somit in direkter Nachbarschaft zu den Fenstern befinden. Dies ist zwar vorteilhaft für eine definierte Durchströmung der Küvette, erweist sich aber als Nachteil hinsichtlich der Verschmutzungsgefährdung der Fenster, wenn entsprechende Gase mit Verunreinigungen belastet sind. Die besagten Verunreinigungen schlagen sich dabei auf den Fenstern nieder und verfälschen das Meßergebnis durch die dadurch bewirkte Extentionswirkung der Strahlung ganz erheblich. Dies tritt besonders bei UV-Fotometem auf, weil hier die Strahlung im allgemeinen stärker als im IR-Bereich je nach Wellenlänge gestreut wird.

Aus der DE 100 57 652 A1 ist ein Verfahren zur Messung der Opazität in Gasen bekannt, bei welchem an den Enden der durchströmten Messküvette Abzugskammem vorgesehen sind, die jedoch in direktem Strömungsschluss mit dem Messgas stehen.

Aus der US 5 222 389 ist eine Probenkammer für einen Gasdetektor bekannt, die zur Vermeidung von störenden Kondensaten elektrisch beheizbar ist.

Der Erfindung liegt daher die Aufgabe zugrunde, bei der Verwendung verschmutzungsträchtiger Meßgase den Effekt des Niederschlages der Meßgasverunreinigungen auf den Küvettenfenstem erheblich zu reduzieren, und die Küvette ausserdem von aussen reinigbar ist ohne diese öffnen zu müssen.

Die gestellte Aufgabe ist bei einer Meßküvette durch die Gesamtheit der Merkmale des Anspruches 1 gelöst.

Es ist dabei eine Meßküvette für ein Fotometer zur Bestimmung der Strahlungsabsorption in einem Fotometer gegeben, mit zwei strahlungsdurchlässigen Fenstern sowie Meßgaseingang und Meßgasausgang, wobei die Meßgasküvette (MK) in Gebrauchslage horizontal angeordnet ist und zwei Gasausgänge in der Nähe der Fenster aufweist, und dass der Gaseingang zwischen den Gasausgängen angeordnet ist, derart dass das Messgas mittig in die Messküvette einströmt und sich in zwei Teilströme in entgegengesetzter Richtung aufteilt, und die Gasausgänge so orientiert sind, dass Kondensat nach unten ablaufen kann, dass vor den Fenstern der Messküvette weitere Fenster angeordnet sind, derart, dass diese ein Gasvolumen als Spülküvetten (10, 20) vor den Küvettenfenstem (F1, F2) einschließen, und diese beiden Spülküvetten (10, 20) zur Durchströmung mit Luft oder Inertgas strömungstechnisch miteinander verbunden sind und eine thermische Isolation oder eine Beheizung der Messküvettenfenster bewirken, und dass die strömungstechnisch miteinander verbundenen Spülkammern (10, 20) über ein Pumpsystem mit Unterdruck betrieben werden.

Damit ist eine Küvette geschaffen, bei der sich die Verunreinigungen nicht auf den Fenstern ablagern können. Der Meßgaseingang wird somit erfindungsgemäß so konstruiert, daß er möglichst weit von beiden Fenstern entfernt ist, was bedeutet, daß er im wesentlichen mittig zur Küvettengesamtlänge plaziert ist. Damit dennoch eine gleichmäßige und definierte Durchströmung der Küvette stattfindet, sind in einer Ausgestaltung nunmehr zwei Meßgasausgänge vorgesehen, die wiederum nahe den Küvettenfenstern plaziert sind. Das heißt, ein Meßgasausgang ist an dem einen Küvettenfenster plaziert und der andere Meßgasausgang nahe dem anderen. Das heißt, der Meßgasstrom teilt sich innerhalb der Küvette in zwei Strömungsbereiche, das wiederum heißt, ein Bereich links vom Meßgaseingang und der andere Bereich rechts vom Meßgaseingang. Auch auf diese Weise kommt es zu einer gleichmäßigen Durchströmung der Meßküvette mit nur halber Strömungsgeschwindigkeit..

Das mittig, also fern von den Fenstern einströmende Messgas ist partikel- und/oder aerosolbeladen und kondensiert auf dem Weg zu den Messgasausgängen aus, so dass kein Belag auf den Fenstern entsteht, weil Aerosole und Kondesate bereits auf dem Weg dorthin an der Küvettenwandung kondensieren und dann nach unten ablaufen.

Zur Messung muss das Messgas zur Erzielung eine messeffektwirksamen Wirkungsquerschnittes zwangsläufig durch die Länge der Küvette hindurchgeführt werden. Zur Erzielung eine guten Messeffektes ist es aber gleichwirkend, wenn der Messgasstrom in zwei Teilströme geteilt wird. Wichtig ist aber, dass die Messgasstromteilung so erfolgt, dass auf der Strecke eine Kondensation erfolgen kann, die erreicht ist, bevor die Messgasausgänge erreicht sind. Hinzu kommt zur gewollten und gesteuerten Kondensation auch die Einflussnahme auf die thermodynamischen Größen, die dies bewirken. Hierbei spielt die Temperatur die wesentliche Rolle.

Um einen Ablauf von Kondensat zu erzielen, was eine wesentliche weitere erzielte Wirkung der erfindungsgemäßen Meßküvette ist, ist ausgestaltet, dass die Neigung der Wandung an der Seite des Messgasausganges oder die Neigung der Meßküvette in eingebauter Solllage zum Messgasausgang hin streng monoton fallend ist.

In weiterer Ausgestaltung mit dem Ziel der oben beschriebenen Wirkung der gezielten Kondensaterzeugung ist angegeben, dass die Meßküvette Mittel zur Erzeugung eines Temperaturgradienten innerhalb derselben enthält, bzw mit diesen wärmeleittechnisch verbindbar ist.

Weiterhin ist vorteilhaft ausgestaltet, dass der Messgasausgang der Meßküvette mit einer Kühlfalle verbunden ist.

In weiterer vorteilhafter Ausgestaltung ist vorgesehen, dass die Messküvette und/oder die Fenster der Messküvette aus säurebständigem Kunststoff bestehen. Auf diese Weise können sogar flusssäurehaltige Kondensate ohne Trübung der Fenster ausgehalten werden. D. h. die Messküvette wird resistent gegen saure Kondensate.

Hierzu sind jeweils diejenigen Kunststoffe auszuwählen, die der jeweils anfallenden Säure standhalten.

Die Messküvette kann aber bei Säuren ausser Flusssäure auch vorteilhafterweise aus säurebeständigem Edelstahl bestehen.

Weiterhin ist vorteilhaft, vor den Fenstern der Messküvette Spülvorhänge anzuordnen. Dies erfolgt dabei so dass vor den Fenstern der Messküvette weitere Fenster angeordnet sind, derart, dass diese ein Gasvolumen als Spülküvetten vor den Küvettenfenstern einschließen, und diese beiden Spülküvetten zur Durchströmung mit Luft oder Inertgas strömungstechnisch miteinander verbunden sind, und eine thermische Isolation oder eine Beheizung der Messküvettenfenster bewirken.

Eine solche Messküvette ist vorteilhafterweise für ein NDIR-Fotometer, sowie für ein UV-Fotometer sowie auch für ein UV-RAS Fotometer vorteilhaft einsetzbar.

Praktische Versuche haben hierbei gezeigt, daß die erfindungsgemäße Küvette im Vergleich zu einer bekannten Küvette, bei der der Meßgaseingang nahe einem der Küvettenfenster und der Meßgasausgang am anderen Küvettenfenster angeordnet ist, und die Küvette auf diese Weise somit lediglich in einer Richtung durchströmt wird, die erfindungsgemäße Küvette mit der geteilten Durchströmung über eine entsprechende Beobachtungszeit hin eine signifikant kleinere Verschmutzung der Küvettenfenster, als bei einer Küvette der herkömmlichen Bauart bewirkt.

Es hat sich hernach gezeigt, daß bei verschmutzungsbelasteten Meßgasen die Verschmutzungen im wesentlichen im Bereich des Meßgaseinganges ablagern. Befände sich also wie bei bekannten Küvetten der Meßgaseingang nahe einer der beiden Küvettenfenster, so würde natürlich dieses stark verschmutzt. Bei der Küvette der erfindungsgemäßen Bauform ist der Meßeingang mittig, innerhalb des Rohrbereiches, wobei sich die Verschmutzungen dort im Rohr, im allgemeinen gegenüber dem Gaseingang, ablagern, und die Fenster von den Ablagerungen frei bleibt. Selbst obwohl dort die Meßgasausgänge plaziert sind, lagern sich dort über lange Zeit hin keine Verschmutzungen ab.

Damit ist mit einer Meßküvette der erfindungsgemäßen Art die gestellte Aufgabe auf einfache, aber sehr wirkungsvolle Weise gelöst.

Das System lässt somit bewusst Säurekondensat in der Messküvette zu.

Teilchen, Kondensat Aerosole etc konglomerieren am Boden der Messküvette nahe dem Messgasausgang und können durch die erfindungsgemäße Konstruktion dort ablaufen.

Die Erfindung ist in der Zeichnung dargestellt und nachfolgend näher beschrieben.

Es zeigt:
- Figur 1:: Messküvette mit einem Gasseingang und einem Gasausgang.
- Figur 2:: Messküvette der Erfindung mit Spülgasvorhängen.

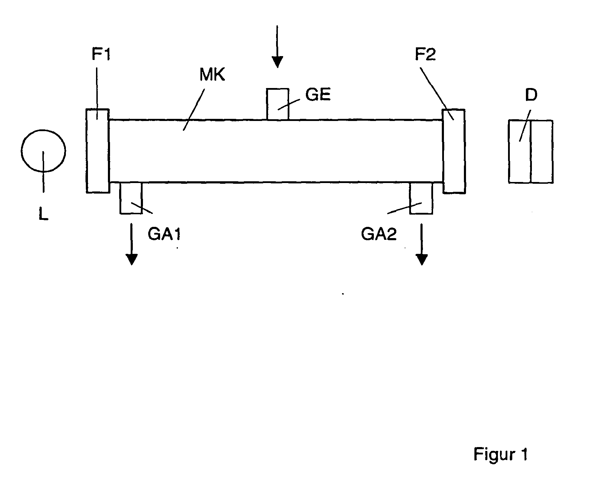

Figur 1 zeigt eine Strahlungsquelle L , die linksseitig einer mittig angeordneten meßgasdurchströmten Meßküvette MK plaziert ist. Die Meßgasküvette MK ist dabei auf der Strahlungsquellenseite mit einem Fenster F1 und auf der dem Detektor D zugewandten Seite mit einem Fenster F2 verschlossen. Die beiden Fenster sind für die für die Messung wesentlichen Strahlungsbanden und Energiebereiche optisch durchlässig. Extinktionsverluste durch die Fenster werden dabei durch eine Kalibrierung eliminiert.

In erfindungsgemäßer Weise befindet sich der Meßgaseingang nunmehr nicht mehr nahe einem der beiden Fenster F1 oder F2, sondern in diesem Falle weitestgehend mittig, das heißt mit großem und jeweils gleichem Abstand zum Fenster F1 und F2. Dieser Meßgaseingang GE kann dabei schmutzbefrachtetes Meßgas in die Meßküvette einbringen. Dieses lagert sich, wie gemäß grundlegender Erkenntnis zur erfindungsgemäßen Küvette auch erwiesen wurde, nahe dem Bereich des Meßgaseinganges innerhalb des Rohres der Meßküvette MK ab. Da der Meßgaseingang GE nunmehr aber mittig im Rohr angeordnet ist, sind die Ablagerungsbereiche innerhalb der rohrförmigen Meßküvette MK nunmehr weit von den Fenstern entfernt und die Gasschmutzpartikel lagern sich auf der Wandung des Rohres ab, wo sie keinen optischen Einfluß auf die Messung haben. Die Meßgasausgänge GA1 und GA2 befinden sich auf der gegenüberliegenden Seite des Rohres, jedoch nahe den Fenstern F1 und F2. Im Bereich der Gasausgänge GA1 und GA2 finden keine nennenswerten Ablagerungen der Verschmutzungsfracht des Meßgases statt.

Somit ist die gesamte Küvette verschmutzungstoleranter, und sie ist über deutlich längere Meßperioden hin somit im Ergebnis wesentlich genauer.

Die erfindungsgemäße Meßküvette läßt sich in vorteilhafter Weise bei allen Fotometern insbesondere bei NDIR-Fotometern und vor allem bei UV-Fotometern insbesondere dem UV-RAS-Verfahren vorteilhaft einsetzen.

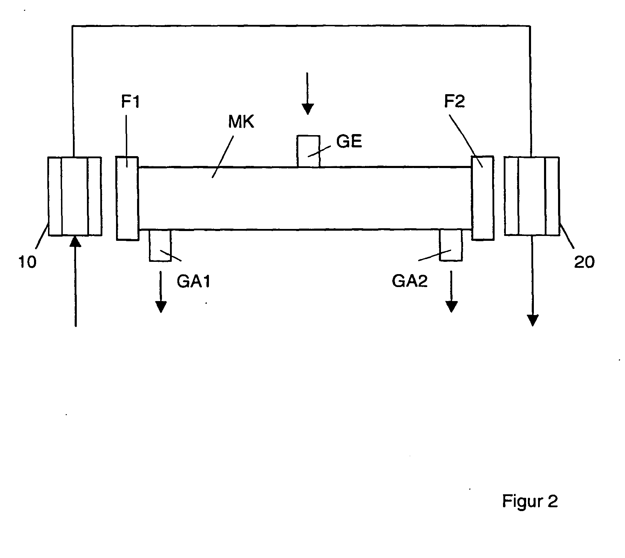

Figur 2 zeigt die Messküvette der Erfindung mit sogenannten Spülvorhängen 10 und 20. Diese Spülvorhänge sind quasi wiederum kleine Küvetten die inertgas- oder luftgespült werden und beidseitig mit optisch durchgängigen Fenstern versehen sind. Die optische Durchgängigkeit bezieht sich dabei auf die für die Messung jeweils benötigte Durchlässigkeit in bestimmten Wellenlängenbereichen. Diese Spülvorhänge sind strömungstechnisch miteinander verbunden, und werden so von einem Pumpsystem beaufschlagt. Bei Betrieb mit Unterdruck werden die Küvettenfenster F1 und F2 vor Abkühlung geschützt und gleichzeitig kann Messgas, dass durch Undichtigkeiten der über Dichtungen mit der Spülkammer sonst in das Messgerät strömt, nach aussen geleitet werden. Über vorgewärmtes Spülgas können die Messküvettenfenster auch indirekt thermisch geregelt werden.

## Patentansprüche

1. Meßküvette für ein Fotometer zur Bestimmung der Strahlungsabsorption in einem Fotometer, mit zwei strahlungsdurchlässigen Fenstern sowie Meßgaseingang und Meßgasausgang, wobei die Meßgasküvette (MK) in Gebrauchslage horizontal angeordnet ist und zwei Gasausgänge in der Nähe der Fenster aufweist, und wobei der Gaseingang zwischen den Gasausgängen angeordnet ist, derart dass das Messgas mittig in die Messküvette einströmt und sich in zwei Teilströme in entgegengesetzter Richtung aufteilt, und die Gasausgänge so orientiert sind, dass Kondensat nach unten ablaufen kann, **dadurch gekennzeichnet dass** vor den Fenstern der Messküvette weitere Fenster angeordnet sind, derart, dass diese ein Gasvolumen als Spülküvetten (10, 20) vor den Küvettenfenstem (F1, F2) einschließen, und diese beiden Spülküvetten (10, 20) zur Durchströmung mit Luft oder Inertgas strömungstechnisch miteinander verbunden sind und eine thermische Isolation oder eine Beheizung der Messküvettenfenster bewirken, und dass die strömungstechnisch miteinander verbundenen Spülkammern (10, 20) über ein Pumpsystem mit Unterdruck betrieben werden.

2. Messküvette nach Anspruch 1,
**dadurch gekennzeichnet,**
**dass** die Messgasausgänge trichterförmig von der Küvette in die Messgasleitungen münden, derart dass Kondensat in weitem Bereich des Küvettenbodens nach unten abfließen kann.

3. Meßküvette nach Anspruch 1,
**dadurch gekennzeichnet,**
**dass** die Neigung der Wandung an der Seite des Messgasausganges oder die Neigung der Meßküvette in eingebauter Solllage zum Messgasausgang hin streng monoton fallend ist.

4. Meßküvette nach einem der vorhergehenden Ansprüche,
**dadurch gekennzeichnet,**
**dass** die Meßküvette Mittel zur Erzeugung eines Temperaturgradienten innerhalb derselben enthält, bzw mit diesen wärmeleittechnisch verbindbar ist.

5. Meßküvette nach einem der vorhergehenden Ansprüche,
**dadurch gekennzeichnet,**
**dass** der Messgasausgang der Meßküvette mit einer Kühlfalle verbunden ist.

6. Messküvette nach einem der vorhergehenden Ansprüche,
**dadurch gekennzeichnet,**
**dass** die Messküvette und/oder die Fenster der Messküvette aus säurebeständigem Kunststoff bestehen.

7. Messküvette nach einem der vorhergehenden Ansprüche,
**dadurch gekennzeichnet,**
**dass** die Messküvette aus säurebeständigem Edelstahl besteht.

8. Meßküvette nach mindestens einem der vorhergehenden Ansprüche,
**dadurch gekennzeichnet,**
**daß** eine Küvette dieser Art für ein NDIR-Fotometer eingesetzt wird.

9. Meßküvette nach mindestens einem der vorhergehenden Ansprüche,
**dadurch gekennzeichnet,**
**daß** eine Küvette dieser Art für ein UV-Fotometer eingesetzt wird.

10. Meßküvette nach mindestens einem der vorhergehenden Ansprüche,
**dadurch gekennzeichnet,**
**daß** eine Küvette dieser Art für ein UV-RAS Fotometer eingesetzt wird.

## Claims

1. Measuring cuvette for a photometer for determining the radiation absorption in a photometer, having two radiation transmissive windows and a measuring gas inlet and measuring gas outlet, the measuring gas cuvette (MK) being arranged horizontally in the position of use and having two gas outlets in the vicinity of the windows, and the gas inlet being arranged between the gas outlets in such a way that the measuring gas flows into the middle of the measuring cuvette and splits into two partial flows in opposite directions, and the gas outlets being oriented such that condensate can run off downwards, **characterized in that** further windows are arranged upstream of the windows of the measuring cuvette in such a way that said further windows enclose a gas volume as washing cuvettes (10, 20) upstream of the cuvette windows (F1, F2), and these two washing cuvettes (10, 20) are interconnected hydrodynamically for the throughflow of air or inert gas and effect thermal insulation or heating of the measuring cuvette windows, and **in that** the hydrodynamically interconnected washing chambers (10, 20) are operated at low pressure via a pump system.

2. Measuring cuvette according to Claim 1, **characterized in that** the measuring gas outlets open from the cuvette in the shape of a funnel into the measuring gas lines in such a way that condensate can flow off downwards in a wide region of the bottom of the cuvette.

3. Measuring cuvette according to Claim 1, **characterized in that** the wall inclination on the side of the measuring gas outlet or, in its installed desired position, the measuring cuvette inclination is strictly monotonically falling towards the measuring gas outlet.

4. Measuring cuvette according to one of the preceding claims, **characterized in that** the measuring cuvette contains means for producing a temperature gradient therein, or can be connected thereto in a thermally conducting fashion.

5. Measuring cuvette according to one of the preceding claims, **characterized in that** the measuring gas outlet of the measuring cuvette is connected to a cold trap.

6. Measuring cuvette according to one of the preceding claims, **characterized in that** the measuring cuvette and/or the windows of the measuring cuvette consist of acid resistant plastic.

7. Measuring cuvette according to one of the preceding claims, **characterized in that** the measuring cuvette consists of acid resistant stainless steel.

8. Measuring cuvette according to at least one of the preceding claims, **characterized in that** a cuvette of this type is used for an NDIR photometer.

9. Measuring cuvette according to at least one of the preceding claims, **characterized in that** a cuvette of this type is used for a UV photometer.

10. Measuring cuvette according to at least one of the preceding claims, **characterized in that** a cuvette of this type is used for a UV-RAS photometer.

## Revendications

1. Cuvette de mesure pour un photomètre destinée à déterminer l'absorption du rayonnement dans un photomètre, comprenant deux fenêtres transparentes au rayonnement ainsi qu'une entrée de gaz de mesure et une sortie de gaz de mesure, la cuvette à gaz de mesure (MK) en position de fonctionnement étant disposée horizontalement et présentant deux sorties de gaz à proximité de la fenêtre, et l'entrée de gaz étant disposée entre les sorties de gaz de sorte que le gaz de mesure pénètre au centre dans la cuvette de mesure et se sépare en deux courants partiels de directions opposées, et les sorties de gaz étant orientées de telle sorte que l'eau de condensation peut s'écouler vers le bas, **caractérisée en ce que** des fenêtres supplémentaires sont disposées devant les fenêtres de la cuvette de mesure de telle sorte que celles-ci englobent un volume de gaz faisant office de cuvettes de rinçage (10, 20) devant les fenêtres de cuvette (F1, F2) et ces deux cuvettes de rinçage (10, 20) sont reliées entre elles par technique des fluides pour être traversées par un courant d'air ou du gaz inerte et réalisent une isolation thermique ou un chauffage des fenêtres de la cuvette de mesure, et que les chambres de rinçage (10, 20) reliées entre elles par technique des fluides sont utilisées en dépression par le biais d'un système à pompe.

2. Cuvette de mesure selon la revendication 1, **caractérisée en ce que** les sorties de gaz de mesure débouchent en forme d'entonnoir de la cuvette dans les conduites de gaz de mesure de telle sorte que l'eau de condensation peut s'écouler vers le bas dans la zone supplémentaire du fond de la cuvette.

3. Cuvette de mesure selon la revendication 1, **caractérisée en ce que** l'inclinaison de la paroi sur le côté de la sortie de gaz de mesure ou l'inclinaison de la cuvette de mesure en position de montage voulue est en descente fortement monotone en direction de la sortie de gaz de mesure.

4. Cuvette de mesure selon l'une des revendications précédentes, **caractérisée en ce que** la cuvette de mesure contient des moyens pour produire un gradient de température à l'intérieur de celle-ci ou peut être reliée par conduction thermique avec ceux-ci.

5. Cuvette de mesure selon l'une des revendications précédentes, **caractérisée en ce que** la sortie de gaz de mesure de la cuvette de mesure est reliée avec un piège cryogénique.

6. Cuvette de mesure selon l'une des revendications précédentes, **caractérisée en ce que** la cuvette de mesure et/ou la fenêtre de la cuvette de mesure sont constituées de matière plastique résistante à l'acide.

7. Cuvette de mesure selon l'une des revendications précédentes, **caractérisée en ce que** la cuvette de mesure est en acier inoxydable résistant à l'acide.

8. Cuvette de mesure selon l'une des revendications précédentes, **caractérisée en ce qu'**une cuvette de ce type est utilisée pour un photomètre NDIR.

9. Cuvette de mesure selon l'une des revendications précédentes, **caractérisée en ce qu'**une cuvette de ce type est utilisée pour un photomètre UV.

10. Cuvette de mesure selon l'une des revendications précédentes, **caractérisée en ce qu'**une cuvette de ce type est utilisée pour un photomètre UV-RAS.
